(19) **Europäisches Patentamt / European Patent Office / Office européen des brevets**

(11) **EP 4 524 170 A1**

(12) **EUROPEAN PATENT APPLICATION**
published in accordance with Art. 153(4) EPC

(43) Date of publication:
**19.03.2025 Bulletin 2025/12**

(21) Application number: **23824290.3**

(22) Date of filing: **16.06.2023**

(51) International Patent Classification (IPC):
*C08F 220/18* (2006.01)   *C08F 4/40* (2006.01)
*C08F 2/38* (2006.01)   *C08F 2/44* (2006.01)
*C08K 5/29* (2006.01)   *H01M 50/121* (2021.01)
*C08J 5/18* (2006.01)

(52) Cooperative Patent Classification (CPC):
**C08F 2/38; C08F 2/44; C08F 4/40; C08F 220/18;
C08J 5/18; C08J 7/12; C08K 5/29; H01M 50/121**

(86) International application number:
**PCT/KR2023/008384**

(87) International publication number:
**WO 2023/244077 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022   KR 20220074114
17.06.2022   KR 20220074163**

(71) Applicant: **LG CHEM, LTD.**
**Yeongdeungpo-gu**
**Seoul 07336 (KR)**

(72) Inventors:
• **HONG, Jae Sung**
**Daejeon 34122 (KR)**
• **KIM, Hyun Cheol**
**Daejeon 34122 (KR)**
• **KIM, Woo Yeon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **FILM, AND METHOD FOR MANUFACTURING CURED PRODUCT BY USING SAME**

(57)   The present invention relates to a film and a method for producing a cured product using the same, and specifically, relates to a film, which is available for an inert redox initiator system, and a method for producing a cured product. Specifically, the film according to the present invention is characterized in that it comprises a base material and an activation layer containing an initiator component on the surface of the base material, when a layer of a curable composition comprising a curable syrup, a filler component, and an initiator component is brought into contact with the initiator component of the film, a curing reaction is performed, and the initiator component is an inert redox initiator system including an oxidizing agent and a reducing agent, where the reducing agent includes a metal compound, and the metal compound is included in an effective amount only in any one of the activation layer of the film and the layer of the curable composition.

[Figure 1]

## Description

### Technical Field

The present invention relates to a film and a method for producing a cured product using the same, and specifically, relates to a film, which is available for an inert redox initiator system, and a method for producing a cured product.

### Background Art

In the past, solvent-type compositions have been mainly used as the existing method for producing a cured product, where the solvent-type compositions essentially require high temperature or UV irradiation during a curing process, such as a volatilization process of the solvent.

However, if necessary, the curing process may be performed after a composition required to form a cured product is applied to a specific device, where the device to which the curable composition is applied is affected by high temperature or UV irradiation, whereby there may be a problem that physical properties of the device are lowered. In forming the cured product in this way, there are cases where it is difficult to apply high temperature or UV processes.

In addition, the solvent-type compositions cause a contamination problem in the volatilization process of the solvent and a quality issue problem due to gas generation.

To solve the above problems, a method of forming a cured product by minimizing the use of solvents may also be considered, but it is a difficult task to implement a cured product having physical properties like those of a solvent-type composition using a solventless composition.

### Disclosure

### Technical Problem

Therefore, the problem to be solved by the present invention is to provide a cured product which is also producible without applying a separate high temperature or UV process through a film, which is available for an inert redox initiator system, and a method for producing a cured product using the same. The technical problems of the present invention are not limited to the technical problems as mentioned above, and other technical problems without any mention will be clearly understood by those skilled in the art from the following description.

### Technical Solution

The present invention can make various changes and can have various examples, whereby specific examples will be illustrated and described in detail in the drawings. However, these are not intended to limit the present invention to specific embodiments, and it should be understood to include all changes, equivalents, and substitutes included in the spirit and technical scope of the present invention.

In this specification, the term normal temperature or room temperature means a natural temperature without artificially worming or cooling, which can indicate any one temperature of about 10 to 30°C, preferably 23 to 27°C, depending on the season.

The terms used in the present application are only used to describe specific examples, which are not intended to limit the present invention. Singular expressions include plural expressions unless the context clearly dictates otherwise. In the present application, it must be understood that the terms such as "comprise" or "have" are intended to designate the presence of features, numbers, steps, operations, components, parts, or combinations thereof described in the specification, but do not exclude in advance the presence or addition possibility of one or more other features, or numbers, steps, operations, components, parts, or combinations thereof.

Unless otherwise defined, all terms used herein, including technical or scientific terms, have the same meanings as those commonly understood by those having ordinary knowledge in the art to which the present invention belongs. Terms such as those defined in commonly used dictionaries should be interpreted as having meanings consistent with the meanings in the context of the related art, which are not interpreted in ideal or excessively formal meanings, unless explicitly defined in the present application.

In one specific example according to the present invention, the present invention may relate to a film. More specifically, the film of the present invention relates to an inert redox system provided as a kit together with a layer of a curable composition, where the inert redox system is premised on an inert redox initiator system. In this specification, the "redox initiator system" means that radical polymerization is initiated by a redox initiator at room temperature, and specifically, means that free radicals generated according to the redox reaction of the initiator initiate radical polymerization through an electron transfer reaction. In particular, the present invention uses an inert redox initiator system, where in this specification, the "inert redox initiator system" means a redox initiator system formulated so that the redox is impossible only with a single initiator component.

In one example, the film according to the present application may comprise a base material, and an activation layer containing an initiator component on the surface of the substrate.

The base material can be used without limitation if the activation layer can be applied to the surface, but one example may include a polymer, a plastic, a metal, a wood, a leather, or a concrete, and the like. An example of the polymer base material may include a cellulose acylate-based polymer, a cycloolefin polymer, a polycarbonate-based polymer, an acrylate-based polymer, a polyester-based polymer, a polyimide-based polymer, and the like, without being limited thereto. An example of the plastic base material may include polyethylene terephthalate (PET), polyethersulfone (PES), polycarbonate (PC), polyarylate (Par), a cyclic olefin copolymer (COC), and the like, without being limited thereto. The metal base material may include aluminum, copper, silver, iron, zinc, nickel, titanium, and gold, and the like, without being limited thereto.

When a layer of a curable composition comprising a curable syrup, a filler component, and an initiator component is brought into contact with the initiator component of the activation layer in the film, the film may perform a curing reaction. As such, the film according to the present invention may have excellent storage properties, and provide a cured product allowing the overall curing uniformly, while the curing reaction is performed only by contacting the film with a layer of the curable composition, because the surface of the film in contact with the curable composition is not only partially cured, but also no curing degree difference almost occurs in the thickness direction of the film.

Meanwhile, in this specification, the "curable syrup" means a unit forming a polymer in the final cured product through curing or crosslinking, which may comprise an oligomer formed by polymerizing two or more monomers, or a polymer component and a monomer component. As one example, the curable syrup may comprise a monomer, a (partial) polymer, and a crosslinking agent, where if the monomer composition is partially polymerized to the (partial) polymer according to the desired composition, some of the monomers are polymerized to form an oligomer or polymer, and the remaining monomers remain, whereby the curable syrup may be constituted.

Therefore, in this specification, the term of a monomer unit, such as a (meth)acrylate unit, which is described below, may mean a monomer existing in a state of forming the oligomer or polymer in the curable syrup, or a monomer which is not polymerized, but contained in the curable syrup. Therefore, when the content of the curable syrup is calculated in this specification, it means that the syrup components include not only components which do not participate in polymerization to be in a monomer state, but also components participating in polymerization.

Meanwhile, as described below, an oxidizing agent and a reducing agent, which are initiator components, are for initiating polymerization only by generating radicals, but are not introduced for the purpose of units forming the polymer in the final cured product, thereby being distinguished from the curable syrup, but some of the initiator components may also exist by binding to the polymer in the final cured product.

Also, in this specification, the initiator component means a redox initiator, which may comprise an oxidizing agent and a reducing agent. In this specification, the oxidizing agent and reducing agent mean components participating or assisting in generating radicals which induce polymerization by participating or assisting in an oxidation-reduction reaction under a redox initiator system.

The curable composition in the present invention comprises a curable syrup containing a monomer unit, a crosslinking agent and/or a (partial) polymer, a filler component, and an initiator, which is a concept encompassing a reducing agent and an oxidizing agent, which needs to be designed to have excellent solubility, compatibility, dispersion rates, and reactivity between the components constituting the composition, without being limited thereto, but the present application can use the following composition.

In one specific example, the curable composition comprises a filler component. The term filler component means a component made of fillers, that is, a component containing only fillers.

In one example, the filler component may comprise 2 types or more of fillers having different average particle diameters from each other. In one example, the filler component may comprise 3 types or more of fillers having different average particle diameters from each other, or may be composed of 3 types to 6 types, 3 types to 5 types, 3 types to 4 types, or 3 types of fillers, having different average particle diameters from each other. That is, in one example, the filler component may also comprise only 3 types to 6 types, 3 types to 5 types, 3 types to 4 types, or 3 types of fillers, having different average particle diameters from each other.

In another example, the filler component may exhibit at least two peaks in a volume curve of particle size distribution measured using a laser diffraction method. In one example, the filler component may exhibit three or more peaks, or may exhibit three to six peaks, three to five peaks, three to four peaks, or three peaks in the volume curve of the particle size distribution. For example, the range of filler components exhibiting three peaks does not include filler components exhibiting one, two, or four or more peaks.

The average particle diameter of the filler of the present application means a particle diameter at which the volume accumulation is 50% in the volume curve of the particle size distribution measured by the laser diffraction method, which may also be called a median diameter. That is, in the present application, the particle size distribution is obtained on a volume basis through the laser diffraction method, and the particle diameter at the point where the cumulative value is 50% in the cumulative curve with the total volume set at 100% is set as the average particle diameter, where in another example, such an average particle diameter may be called the median particle diameter or $D_{50}$ particle diameter.

Therefore, here, the two types of fillers having different average particle diameters may mean fillers having different particle diameters at the point where the cumulative value is 50% in the volume curve of the particle size distribution.

In general, when two types or more of fillers with different average particle diameters from each other are mixed to form a filler component, peaks appear as much as the types of the mixed fillers in the volume curve of the particle size distribution measured using the laser diffraction method for the filler component. Therefore, for example, when the filler component is formed by mixing three types of fillers with different average particle diameters from each other, the volume curve of the particle size distribution measured using the laser diffraction method for the filler component shows three peaks.

The filler component may be a thermally conductive filler component. The term thermally conductive filler component means a filler component functioning so that the curable composition may be cured to exhibit thermal conductivity to be described below.

As one example, the curable composition of the present application may comprise a filler component in an amount of 200 parts by weight or more relative to 100 parts by weight of the curable syrup. In another example, the filler component may be included in an amount of 250 parts by weight or more, 300 parts by weight or more, 350 parts by weight or more, 400 parts by weight or more, 450 parts by weight or more, 500 parts by weight or more, 550 parts by weight or more, 600 parts by weight or more, 650 parts by weight or more, 670 parts by weight or more, 700 parts by weight or more, or 730 parts by weight or more, relative to 100 parts by weight of the curable syrup, and the upper limit thereof is not greatly limited, but may be 1,500 parts by weight or less, 1,400 parts by weight or less, 1,300 parts by weight or less, 1,200 parts by weight or less, 1,100 parts by weight or less, 1,000 parts by weight or less, 900 parts by weight or less, or 800 parts by weight or less.

That is, according to the present application, the curable composition may exhibit excellent thermal conductivity by comprising a relatively excessive amount of the filler component and simultaneously increasing a packaging density through adjustment of the particle diameter and/or ratio of the fillers included in the filler component, and may also provide a cured product capable of curing by a redox initiator at room temperature without any energy source such as separate UV or heat, and having the desired physical properties.

The filler component included in the curable composition of the present application may satisfy the following general equation 1.

[General Equation 1]

$$5 \leq D_{50A}/D_{50C} \leq 100$$

In General Equation 1, $D_{50A}$ is the maximum average particle diameter of the filler component, and $D_{50C}$ is the minimum average particle diameter of the filler component.

Here, when the filler component comprises two types or more of fillers with different average particle diameters from each other, the maximum average particle diameter ($D_{50A}$) of the filler component may mean the average particle diameter of the filler with the largest average particle diameter among the fillers included in the filler component. Alternately, in another example, the maximum average particle diameter ($D_{50A}$) of the filler component may mean the particle diameter of the peak that appears at the largest particle diameter among the peaks that appear in the volume curve of the particle size distribution measured using the laser diffraction method for the filler component.

Here, when the filler component comprises two types or more of fillers with different average particle diameters from each other, the minimum average particle diameter ($D_{50C}$) of the filler component may mean the average particle diameter of the filler with the smallest average particle diameter among the fillers included in the filler component. Alternately, in another example, the minimum average particle diameter ($D_{50C}$) of the filler component may mean the particle diameter of the peak that appears at the smallest particle diameter among the peaks that appear in the volume curve of the particle size distribution measured using the laser diffraction method for the filler component.

In another example, the $D_{50A}/D_{50C}$ value of General Equation 1 above may further also be adjusted within a range of 5 or more, 7 or more, 10 or more, 13 or more, 15 or more, 17 or more, 20 or more, 23 or more, 25 or more, 27 or more, 30 or more, 32 or more, 34 or more, 36 or more, 38 or more, 40 or more, or 42 or more and/or within a range of 100 or less, 95 or less, 90 or less, 85 or less, 80 or less, 75 or less, 70 or less, 65 or less, 60 or less, 58 or less, 56 or less, 54 or less, 52 or less, 50 or less, 48 or less, 46 or less, or 44 or less.

As one example, the filler component of the curable composition in the present application may comprise fillers having at least three different average particle diameters. Such a filler component may exhibit at least three peaks in the volume curve of particle size distribution measured using the laser diffraction method. In order that the curable composition is cured to exhibit thermal conductivity above a certain level, it is generally necessary to apply an excessive amount of filler, and according to the present application, it is very effective in exerting the desired hardness and thermal conductivity even when applied to a curable composition comprising an excessive amount of filler. However, if the filler is included in an excessive amount, there may be a problem in which the viscosity of the curable composition comprising the filler increases significantly, but as the filler component of the present application applies fillers having different average particle diameters to be capable of satisfying General Equation 1 above, it is possible to maintain the viscosity, and the like of the curable composition at an appropriate level, even if an excessive amount of filler is applied to the curable composition.

In one specific example, the filler component may comprise a first filler with an average particle diameter of more than 40μm and 200μm or less, a second filler with an average particle diameter of more than 5μm and 40μm or less, and a third filler with an average particle diameter of 0.2μm to 5μm. The filler component may comprise the three types of fillers, or may comprise only the three types of fillers. In addition, when the three types of fillers are included, the first filler may be a filler with the largest average particle diameter among the fillers contained in the filler component, and the third filler may be a filler with the smallest average particle diameter among the fillers contained in the filler component. Therefore, in this case, the average particle diameter of the first filler may be the maximum average particle diameter ($D_{50A}$) of General Equation 1 above, and the average particle diameter of the third filler may be the minimum average particle diameter ($D_{50C}$) of General Equation 1 above.

In another specific example, the volume curve of the particle size distribution measured using the laser diffraction method for the filler component may show a first peak that the particle diameter appears within a range of more than 40μm and 200μm or less, a second peak that the particle diameter appears within a range of more than 5μm and 40μm or less, and a third peak that the particle diameter appears within a range of 0.2μm to 5μm. The volume curve of the particle size distribution may include at least the three types of peaks, or may represent only the three types of peaks. In addition, when the at least the three types of peaks are included, the first peak may be a peak that appears at the largest particle diameter among the peaks represented by the volume curve, and the third peak may be a peak that appears at the lowest particle diameter among the peaks represented by the volume curve. Therefore, in this case, the particle diameter at which the first peak appears may be the maximum average particle diameter ($D_{50A}$) of General Equation 1 above, and the particle diameter at which the third peak appears may be the minimum average particle diameter ($D_{50C}$) of General Equation 1 above.

In another example, the average particle diameter of the first filler or the particle diameter at which the first peak appears may further be adjusted within a range of 190 μm or less, 180 μm or less, 170 μm or less, 160 μm or less, 150 μm or less, 140 μm or less, 130 μm or less, 120 μm or less, 115 μm or less, 110 μm or less, 105 μm or less, 100 μm or less, 95 μm or less, 90 μm or less, 85 μm or less, 80 μm or less, or about 75 μm or less and/or a range of 61 μm or more, 62 μm or more, 63 μm or more, 64 μm or more, 65 μm or more, 66 μm or more, 67 μm or more, 68 μm or more, 69 μm or more, or 70 μm or more.

Also, in another example, the average particle diameter of the second filler or the particle diameter at which the second peak appears may further be adjusted within a range of about more than 6 μm, more than 7 μm, more than 8 μm, more than 9 μm, more than 10 μm, more than 11 μm, more than 12 μm, more than 13 μm, more than about 14 μm, more than 15 μm, more than 16 μm, more than 17 μm, more than 18 μm, or more than 19 μm and/or within a range of 39 μm or less, 38 μm or less, 37 μm or less, 36 μm or less, 35 μm or less, 34 μm or less, 33 μm or less, 32 μm or less, 31 μm or less, 30 μm or less, 29 μm or less, 28 μm or less, about 27 μm or less, 26 μm or less, 25 μm or less, 24 μm or less, 23 μm or less, 22 μm or less, 21 μm or less, or 20 μm or less.

In addition, in another example, the average particle diameter of the third filler or the particle diameter at which the third peak appears may further be adjusted within a range of about 0.3 μm or more, 0.4 μm or more, or about 0.5 μm or more and/or within a range of about 5 μm or less, 4.5 μm or less, about 4 μm or less, about 3.5 μm or less, about 3.3 μm or less, about 3 μm or less, about 2.7 μm or less, about 2.5 μm or less, about 2 μm or less, or about 1.7 μm or less.

When the filler component includes the three types of fillers as above, the ratio (D1/D2) of the average particle diameter (D1) of the first filler and the average particle diameter (D2) of the second filler may be in a range of about 3 to 20. In another example, the ratio (D1/D2) may be 3.1 or more, 3.2 or more, 3.3 or more, 3.4 or more, or 3.5 or more, or may also be 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, or 4 or less or so.

If a second filler and a third filler having a size in the range are included together with the first filler, and their relationship satisfies General Equation 1 above, and the like, it is possible to effectively satisfy high thermal conductivity while the viscosity of the resin composition is maintained at an appropriate level.

In one example, the curable composition may comprise the filler component in an amount of 200 parts by weight or more relative to 100 parts by weight of the curable syrup. In another example, the filler component may be included in an amount of 250 parts by weight or more, 300 parts by weight or more, 350 parts by weight or more, 400 parts by weight or more, 450 parts by weight or more, 500 parts by weight or more, 550 parts by weight or more, 600 parts by weight or more, 650 parts by weight or more, or 700 parts by weight or more, relative to 100 parts by weight of the curable syrup. The upper limit of the filler component is not significantly limited, but may be 2,000 parts by weight or less, 1,500 parts by weight, 1,000 parts by weight, or 900 parts by weight or less, relative to 100 parts by weight of the curable syrup.

Meanwhile, when the first to third fillers are included in the filler component, about 10 to 90 parts by weight of the second filler and about 60 to 140 parts by weight of the third filler may be included, relative to 100 parts by weight of the first filler. In another example, the ratio of the second filler relative to 100 parts by weight of the first filler may be about 15 parts by weight or more, about 20 parts by weight or more, about 25 parts by weight or more, about 30 parts by weight or more, about 35 parts by weight or more, about 40 parts by weight or more, about 45 parts by weight or more, or about 47 parts by weight or more, or may be about 85 parts by weight or less, about 80 parts by weight or less, about 75 parts by weight or less, about 70 parts by weight or less, about 65 parts by weight or less, about 60 parts by weight or less, about 55 parts by weight or less, or about 53 parts by weight or less or so, and in another example, the ratio of the third filler may be about 65 parts by weight or more, about 70 parts by weight or more, about 75 parts by weight or more, about 80 parts by weight or more, about 85 parts by weight or more, about 90 parts by weight or more, or about 95 parts by weight or more, or may be about 135 parts by weight or less, about 130 parts by weight or less, about 125 parts by weight or less, about 120 parts by weight or less, about 115 parts by weight or less, about 110 parts by weight or less, or about 105 parts by weight or less or so.

As one example, the content of the first filler may be about 10 parts by weight to about 60 parts by weight relative to 100 parts by weight of the entire filler components, the content of the second filler may be about 1 part by weight to about 40 parts by weight relative to 100 parts by weight of the entire filler components, and the content of the third filler may be about 10 parts by weight to about 60 parts by weight relative to 100 parts by weight of the entire filler.

In one example, the filler component may comprise a spherical filler in an amount of 30 wt% or more. Typically, if the shape of the filler is spherical, it is not advantageous to achieve higher thermal conductivity. That is, in terms of thermal conductivity, it is advantageous to use a non-spherical filler. However, it is not advantageous in terms of hardness of a solidified product when the filler is non-spherical, so that by including a spherical filler above a certain level in the filler component, it is possible to exert an advantageous effect in terms of hardness of the solidified product. In addition, according to the composition of the present application, high thermal conductivity can be achieved even under the content of the spherical filler as described above. In another example, the content of the spherical filler in the filler component may be 35 wt% or more, 40 wt% or more, 45 wt% or more, 50 wt% or more, 55 wt% or more, or 57 wt% or more. The upper limit of the content of the spherical filler in the filler component may be adjusted within a range of 95 wt% or less, 90 wt% or less, 85 wt% or less, 80 wt% or less, 75 wt% or less, 70 wt% or less, or 65 wt% or less considering the thermal conductivity and hardness characteristics of the solidified product material.

For example, if a non-spherical filler exists in the filler component, it is advantageous to select a filler with a small average particle diameter as the non-spherical filler. For example, if the filler component comprises the first to third fillers, a non-spherical filler may be selected as the third filler.

The term spherical filler is a filler with a sphericity degree of 0.9 or more. In another example, the sphericity degree of the spherical filler may be 0.95 or more. Therefore, fillers with a sphericity degree of less than 0.9 are non-spherical fillers.

The sphericity degree can be confirmed through a particle shape analysis of particles. In one specific example, the sphericity degree of the filler may be defined as the ratio (S'/S) of the surface area (S) of a particle and the surface area (S') of a sphere having the same volume as the particle. For real particles, a circularity degree is generally used. The circularity degree is represented as the ratio of the boundary (P) of an image, which is obtained from a two-dimensional image of a real particle, and the boundary of a circle having the same area (A) as that of the same image, and is obtained by the following equation.

<Circularity degree equation>

$$\text{Circularity degree} = 4\pi A/P^2$$

The circularity degree is expressed as a value from 0 to 1, where a perfect circle has a value of 1, and the more irregularly shaped particles have values lower than 1.

As one example, the filler component may be a thermally conductive filler component. As described above, the term thermally conductive filler is a filler component functioning so that the curable composition is cured to exhibit a thermal conductivity of about 3.0 W/mK or more. Such a filler component may comprise a filler made of a material with a thermal conductivity of about 1 W/mK or more, 5 W/mK or more, 10 W/mK or more, or about 15 W/mK or more. In another example, the thermal conductivity of the material may be about 400 W/mK or less, 350 W/mK or less, or about 300 W/mK or less. The type of such a material is not particularly limited, which may be exemplified by, for example, a ceramic material such as aluminum oxide (alumina: $Al_2O_3$), aluminum nitride (AlN), boron nitride (BN), silicon nitride ($Si_3N_4$), silicon carbide (SiC), beryllium oxide (BeO), zinc oxide (ZnO), magnesium oxide (MgO), or boehmite.

The filler component may comprise various types of fillers, if necessary, in addition to such a thermally conductive filler, and for example, a carbon filler such as graphite, or a filler such as fumed silica, clay, aluminum hydroxide ($Al(OH)_3$), magnesium hydroxide ($Mg(OH)_2$) or calcium carbonate ($CaCO_3$), and the like may be applied.

In one example, the filler component may have a moisture content (water content) of about 1,000 ppm or less. The moisture content can be measured with a Karl Fishcer titrator (KR831) under conditions of relative humidity of 10% and drift of 5.0 or less. At this time, the moisture content may be the average moisture content for all filler components used in the resin composition. In the present application, a filler component satisfying the above conditions may also be selectively used, or the water content of the filler may also be adjusted to satisfy the above moisture content range by a method of drying the filler component to be used in an oven at a temperature of about 200° C, and the like. In another example, the upper limit of the moisture content of the filler component may be about 800 ppm or less, 600 ppm or less, or about 400 ppm or less, and the lower limit thereof may be about 100 ppm or more, or about 200 ppm or more.

In one example, the curable composition may comprise a reducing agent in a range of 0.05 to 6 parts by weight relative to 100 parts by weight of the curable syrup, which is not limited thereto, but as one example, the lower limit of the reducing agent content may be 0.1 parts by weight or more, 0.3 parts by weight or more, 0.5 parts by weight or more, 0.7 parts by weight or more, 1 part by weight or more, 1.3 parts by weight or more, 1.5 parts by weight or more, 1.7 parts by weight or more, 2 parts by weight or more, 2.3 parts by weight or more, 2.5 parts by weight or more, 2.7 parts by weight parts or more, 3 parts by weight or more, or 3.2 parts by weight or more, and the upper limit thereof may be 6 parts by weight or less, 5.5 parts by weight or less, 5 parts by weight or less, 4.5 parts by weight or less, 4 parts by weight or less, or 3.5 parts by weight or less. By comprising the reducing agent in the above content, the present invention can obtain a cured product securing sufficient curability to have the desired physical properties.

Also, in one example, the reducing agent may comprise a metal compound. According to the present invention, the metal compound is not significantly limited, if the layer of the curable composition and the layer of the initiator component are in direct contact with each other to induce or promote a redox reaction without separate heat or UV irradiation, and the composition containing the reducing agent can be stored stably, and it is particularly preferable to have excellent solubility, compatibility, dispersion rates, and reactivity with the curable syrup.

The metal compound may be included in an effective amount only in any one of the layer of the initiator component in the film and the layer of the curable composition. Here, the effective amount means an amount capable of inducing a significant oxidation-reduction reaction to produce a cured product. That is, the metal compound may be included in an effective amount only in any one of the layer of the initiator component and the layer of the curable composition, and may not be included substantially in the other layer. As one example, when the metal compound is included in an effective amount in the layer of the initiator component, the metal compound may not be substantially included in the layer of the curable composition. In addition, as another example, when the metal compound is included in an effective amount in the layer of the curable composition, the metal compound may not be substantially included in the layer of the initiator component. Here, the meaning that it is not substantially included may be one included in 0 wt%, and even if the metal compound is included in the layer of the curable composition, it is included in 1 wt% or less, 0.5 wt% or less, or 0.1 wt% or less, whereby it may be one included in a trace amount rather than an effective amount capable of inducing the oxidation-reduction reaction.

In addition, among the layer of the initiator component in the film and the layer of the curable composition, the layer containing the metal compound in an effective amount may not substantially contain an oxidizing agent. That is, in the present invention, the case where the oxidizing agent and the metal compound are contained substantially together in the same layer before forming the cured product may not be assumed. In other words, when the metal compound is included in an effective amount in the layer of the initiator component in the film, the oxidizing agent may not be included in an effective amount in the layer of the initiator component in the film, but may be included in an effective amount in the layer of the curable composition. As another example, when the metal compound is included in an effective amount in the layer of the curable composition, the oxidizing agent may not be included in the layer of the curable composition in an effective amount, but may be included in an effective amount in the layer of the initiator component of the film.

As one example, the metal included in the metal compound may be a transition metal, and the metal compound may be a salt or chelate containing a metal ion, or a hydrate thereof and may comprise one type or more. Here, the metal ion may be one or more selected from cobalt, iron, vanadium, copper, manganese, nickel, titanium, aluminum, tin, chromium, zinc, zirconium, indium, manganese, and a mixture thereof. In detail, the metal compound may be a cobalt-containing component, where in the cobalt-containing component, the cobalt may have a +2-valent or +3-valent oxidation state. The usable cobalt-containing component may include cobalt naphthenate, cobalt sulfide, and the like, but is not limited thereto. As another example, the metal compound may be an iron-containing component, where in the iron-containing component, the iron may have a +2-valent or +3-valent oxidation state. The usable iron-containing component may include iron (III) sulfate, iron (II) sulfate, iron (III) chloride, iron (II) chloride, iron carboxylate, iron naphthenate, iron (III), iron (II), or acetylacetonate iron (III), but is not limited thereto. As another example, the metal compound may be a vanadium-containing component, where in the vanadium-containing component, the vanadium may have a +4-valent or +5-valent oxidation state. The usable vanadium-containing component may include vanadyl acetylacetonate, vanadyl stearate, vanadium naphthenate, vanadium benzoyl acetonate, vanadyl oxalate, vanadium (V) oxytriisopropoxide, ammonium metavanadate (V), sodium metavanadate, vanadium (V) pentoxide, or vanadyl sulfate (V), but is not limited thereto. As another example, the metal compound may be a copper-containing component, where in the copper-containing component, the copper may have a +1-valent or +2-valent oxidation state. The usable copper-containing component may include copper acetate, copper chloride, copper benzoate, copper acetonate, copper naphthenate, copper carboxylate, copper salicylate, a complex or ethylenediamine tetra-acetic acid of copper and thiourea, but is not limited thereto. In addition to this, the metal compound may be exemplified by manganese naphthenate, nickel naphthenate, titanium acetylacetonate, copper sulfate, manganese sulfate, or nickel sulfate, and the like. In addition, the reducing agent may include an organic compound, where the organic compound is not significantly limited, if it induces or promotes the oxidation-reduction reaction by directly contacting the layer of the curable composition with the layer of the initiator component without separate heat or UV irradiation.

The organic compound may also be substantially included together in a layer containing an oxidizing agent among the layer of the initiator component in the film and the layer of the curable composition, and may also be substantially included together in a layer containing a metal compound, but may be selectively and substantially included only in either the layer containing the oxidizing agent or the layer containing the metal compound.

As one example, the organic compound may be at least one from the group consisting of amines, pyridines, aldehyde amine condensation compounds, thioureas, and their derivatives, and may also be two or more. In detail, an example of the organic compound may include N,N-dimethyl p-toluidine, N,N-dimethyl formamide, triethylamine, N,N-diisopropanol p-chloroaniline, N,N-diisopropanol p-bromoaniline, N,N-diisopropanol p-bromo-o-methyl aniline, N,N-dimethyl-p-chloroaniline, N,N-dimethyl-p-bromoaniline, N,N-diethyl-p-chloroaniline, N,N-diethyl-p-bromoaniline, 3,5-diethyl-1,2-dihydro-1-phenyl-2-propyl pyridine, N-benzoyl sulfur urea or tetramethyl thiourea, and the like, but is not limited thereto, and preferably, a tertiary amine-based organic compound may be used. Particularly, the organic compound is preferably a compound which is in a liquid phase and has a half-life within a range of 70 to 170°C or within a range of 80 to 150°C. By using the organic compound whose half-life temperature satisfies the above range, the present invention can suppress the self-reaction in a storage state, and can maintain the viscosity of the composition containing the organic compound at the level desired in the present invention. In this specification, the half-life is an indicator showing a decomposition rate of a compound, which means the time until the remaining amount of the compound is halved.

In one example, when the reducing agent comprises both a metal compound and an organic compound, the organic compound may be included in a range of 5 to 50 parts by weight relative to 100 parts by weight of the metal compound, and as one example, the lower limit thereof may be 6 parts by weight or more, 7 parts by weight or more, 8 parts by weight or more, 9 parts by weight or more, 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 20 parts by weight or more, or 21 parts by weight or more, and the upper limit thereof may be 45 parts by weight or less, 43 parts by weight or less, 40 parts by weight or less, 37 parts by weight or less, 35 parts by weight or less, 30 parts by weight or less, 27 parts by weight or less, 25 parts by weight or less, or 23 parts by weight or less. The present invention can provide a cured product with excellent curing physical properties through sufficient curing rates by comprising the metal compound and the organic compound in the above weight ratio.

Also, in one example, the curable composition may comprise an oxidizing agent, where the oxidizing agent is not significantly limited if it participates in the oxidation-reduction reaction to generate radicals inducing polymerization, and particularly, it is preferable that it has excellent compatibility with the curable syrup. As one example, the oxidizing agent may include a peroxide, a peroxy ester, a diacyl peroxide, or a persulfate, but is not limited thereto, and specifically, as the oxidizing agent, methyl ethyl ketone peroxide, t-butyl hydroperoxide, p-menthane hydroperoxide, cumene hydroperoxide, diisopropylbenzene hydroperoxide, t-butyl peroxylaurate, t-butyl peroxybenzoate, t-butyl peroxydecanoate, 1,5-di-t-butyl peroxy-3,3,5-trimethyl cyclohexane, ethyl acetoacetate peroxide, benzoyl peroxide, hydrogen peroxide, or a combination thereof may be used.

In one example, the oxidizing agent may be included in a range of 30 to 100 parts by weight relative to 100 parts by weight of the reducing agent, and as one example, the lower limit thereof may be 35 parts by weight or more, 37 parts by weight or more, 40 parts by weight or more, 43 parts by weight or more, 45 parts by weight or more, 47 parts by weight or more, 50 parts by weight or more, 53 parts by weight or more, 55 parts by weight or more, or 57 parts by weight or more, and the upper limit thereof may be 95 parts by weight or less, 93 parts by weight or less, 90 parts by weight or less, 87 parts by weight or less, 85 parts by weight or less, 83 parts by weight or less, 80 parts by weight or less, 77 parts by weight or less, 75 parts by weight or less, 73 parts by weight or less, 70 parts by weight or less, 67 parts by weight or less, 65 parts by weight or less, or 63 parts by weight or less.

In one specific example, the curable syrup may be a polymeric component, as described above. In particular, the layer of the curable composition in the present application may comprise the curable syrup together with a large amount of the filler component. Therefore, as described below, by using a curable syrup with specific components in combination with a large amount of the filler component, the present application can have properties which are excellent in compounding properties as well as compatibility between a large amount of the filler component and the curable syrup.

The curable composition may comprise the curable syrup in an amount of 6 to 20 wt%, but is not limited thereto, but as one example, the lower limit of the curable syrup may be 6 wt% or more, 6.5 wt% or more, 7 wt% or more, 7.5 wt% or more, 8 wt% or more, 8.5 wt% or more, 9 wt% or more, 9.5 wt% or more, or 10 wt% or more, and the upper limit thereof may be 19 wt% or less, 18 wt% or less, 17 wt% or less, 16 wt% or less, 15 wt% or less, 14 wt% or less, 13 wt% or less, or 12 wt% or less.

In one example, the curable syrup may comprise an alkyl (meth)acrylate unit, a polar functional group-containing monomer unit, and a crosslinking agent. As one example, the alkyl (meth)acrylate unit may be an alkyl (meth)acrylate having an alkyl group with 4 to 20 carbon atoms, where the carbon number of the alkyl group may be, for example, 16 or less, 12 or less, or 8 or less. Such an alkyl (meth)acrylate may be included in an amount of about 1 to 12 wt% in the curable syrup. In another example, the upper limit of the ratio may be 1.5 wt% or more, 2 wt% or more, 2.5 wt% or more, 3 wt% or more, 3.5 wt% or more, 4 wt% or more, 4.5 wt% or more, 5.5 wt% or more, or 5.7 wt% or more, and the lower limit thereof may be 11.5 wt% or less, 11 wt% or less, 10.5 wt% or less, 10 wt% or less, 9.5 wt% or less, 9 wt% or less, 8.5 wt% or less, 8 wt% or less, 7.5 wt% or less, 7 wt% or less, or 6.5 wt% or less.

In addition, the alkyl group in the alkyl (meth)acrylate unit may be a linear or branched aliphatic alkyl group, and may be in a state of being substituted or unsubstituted. As the linear or branched aliphatic alkyl (meth)acrylate, for example, any one, or two or more selected from the group consisting of n-butyl (meth)acrylate, t-butyl (meth)acrylate, sec-butyl (meth)acrylate, pentyl (meth)acrylate, 2-ethylbutyl (meth)acrylate, 2-ethylhexyl (meth)acrylate, n-octyl (meth)acrylate, isooctyl (meth)acrylate, isononyl (meth)acrylate, lauryl (meth)acrylate and tetradecyl (meth)acrylate may be applied.

The curable syrup may contain, as additional components, a polar functional group-containing monomer unit. The curable syrup may contain, as the polar functional group-containing monomer unit, a hydroxy group-containing monomer unit, a carboxyl group-containing monomer unit, or an epoxy group-containing monomer unit, without being limited thereto.

As the monomer having a polar functional group, for example, a hydroxyalkyl (meth)acrylate such as 2-hydroxyethyl (meth)acrylate, 2-hydroxypropyl (meth)acrylate, 4-hydroxybutyl (meth)acrylate, 6-hydroxyhexyl (meth)acrylate and/or 8-hydroxyoctyl (meth)acrylate (wherein the carbon number of the alkyl group may be 1 to 20, 1 to 16, 1 to 12, 1 to 8 or 1 to 4, and the alkyl group may be linear or branched, or may be substituted or unsubstituted.); or hydroxy polyalkylene glycol (meth)acrylate such as 2-hydroxy polyethylene glycol (meth)acrylate or 2-hydroxy polypropylene glycol (meth)acrylate, and the like, an epoxy group-containing (meth)acrylate such as glycidyl (meth)acrylate, or acrylic acid, and the like may be used, without being limited thereto.

In one embodiment of the present application, the monomer unit having the polar functional group may be included in an amount of 500 parts by weight or more relative to 100 parts by weight of the alkyl (meth)acrylate unit, and in another example, the lower limit thereof may be 600 parts by weight or more, 700 parts by weight or more, 800 parts by weight or more, 900 parts by weight or more, 1,000 parts by weight or more, 1,100 parts by weight or more, 1,200 parts by weight or more, 1,300 parts by weight or more, 1,350 parts by weight or more, 1,400 parts by weight or more, or 1,450 parts by weight or more, and the upper limit thereof may be 3,000 parts by weight or less, 2,500 parts by weight or less, 2,000 parts by weight or less, or 1,700 parts by weight or less.

Although not limited thereto, in one embodiment of the present application, the case where the curable syrup contains, as the polar functional group-containing monomer unit, a hydroxy group-containing monomer unit and an epoxy group-containing monomer unit may be assumed, where the ratio ($M_{OH}/M_E$) of the hydroxy group-containing monomer unit ($M_{OH}$) and the epoxy group-containing monomer unit ($M_E$) may be in a range of 0.1 to 10, and the upper limit thereof may be 0.3 or more, 0.5 or more, 0.7 or more, 1 or more, 1.3 or more, 1.5 or more, 1.7 or more, 2 or more, 2.3 or more, 2.5 or more, 2.7 or more, or 3 or more, and the lower limit thereof may be 9 or less, 8 or less, 7 or less, 6 or less, 5 or less, 4 or less, 3.7 or less, 3.5 or less, or 3.3 or less.

In addition, the curable syrup of the present invention may further include monomer units in addition to the foregoing, if necessary.

For example, the curable syrup may further contain a nitrogen-containing reactive monomer unit. Such a nitrogen-containing reactive monomer may be exemplified by one or two or more from (meth)acrylamide, N,N-dimethyl (meth)acrylamide, N,N-diethyl (meth)acrylamide, N-isopropyl (meth)acrylamide, N-methylol (meth)acrylamide, diacetone (meth)acrylamide, N-vinylacetamide, N,N'-methylenebis(meth)acrylamide, N,N-dimethylaminopropyl (meth)acrylamide, N,N-dimethylaminopropyl (meth)acrylamide, N-vinylpyrrolidone, N-vinylcaprolactam, or (meth)acryloylmorpholine, and the like, but is not limited thereto. A suitable monomer may be exemplified by, for example, (meth)acrylamide, N-alkyl (meth)acrylamide and/or N,N-dialkyl (meth)acrylamide, and the like. Here, the alkyl group may be exemplified by a substituted or unsubstituted alkyl group, which is linear, branched, or cyclic, with 1 to 20 carbon atoms, 1 to 16 carbon atoms, 1 to 12 carbon atoms, 1 to 8 carbon atoms, or 1 to 4 carbon atoms.

The curable composition according to one example of the present application may further comprise a crosslinking agent, if necessary. The crosslinking agent may form a cured product having appropriate adhesion force and hardness by implementing the crosslinked structure with the constitutions included in the curable syrup.

As the crosslinking agent, for example, a urethane-based acrylate crosslinking agent, an aliphatic isocyanate crosslinking agent, an epoxy crosslinking agent, an aziridine crosslinking agent, and a metal chelate crosslinking agent may be used, without being limited thereto. In addition, as the crosslinking agent, one, or two or more types may be used. The urethane-based acrylate crosslinking agent is a compound having a plurality of urethane bonds (-NHCOO-) in its molecular chain and having an acrylic group capable of reacting to ultraviolet rays at the molecular terminal, which may use commercially PU330 (Miwon Commercial), PU256 (Miwon Commercial), PU610 (Miwon Commercial), and PU340 (Miwon Commercial), and the like. The aliphatic isocyanate crosslinking agent is, for example, an isocyanate compound such as isophorone diisocyanate, methylene dicyclohexyl diisocyanate or cyclohexane diisocyanate, but a derivative such as a dimer or trimer thereof may be used. As the epoxy crosslinking agent, for example, ethylene glycol diglycidyl ether, triglycidyl ether, trimethylolpropane triglycidyl ether, N,N,N',N'-tetraglycidyl ethylenediamine or glycerin diglycidyl ether, and the like may be used. As the aziridine crosslinking agent, for example, N,N'-toluene-2,4-bis(1-aziridinecarboxamide), N,N'-diphenylmethane-4,4'-bis(1-aziridinecarboxamide), triethylene melamine, bisisoprotaloyl-1-(2-methylaziridine), or tri-1-aziridinylphosphine oxide, and the like may be used. As the metal chelate crosslinking agent, for example, a metal chelate component or the like, which is a compound in which a multivalent metal such as aluminum, iron, zinc, tin, titanium, antimony, magnesium and/or vanadium is coordinated with acetyl acetone or ethyl acetoacetate, and the like, may be used.

The method of preparing the curable syrup containing such units is not particularly limited. For example, to implement the above-described syrup component, the curable syrup may be formed by mixing monomers in a desired ratio and then partially polymerizing the mixture appropriately.

According to the present invention, it is possible to produce a cured product having physical properties desired in the present invention by only a step of contacting the layer of the curable composition with the layer of the initiator component in the film including the layer of the initiator component on the surface as described above. That is, the present application can provide a cured product having the desired hardness and physical properties without separate heat or UV irradiation as the curing reaction starts at room temperature and proceeds at room temperature. However, it is also possible to additionally add an irradiation step of heat or UV as needed. The curing may be performed by a redox polymerization reaction between the initiator component of the curable composition and the initiator component present on the surface of the film.

The cured product of the present invention can be produced, as layers having different components are in contact with each other and the metal compound diffuses into the contact layer, thereby inducing an oxidation-reduction reaction, where if the curing reaction proceeds too quickly, the metal compound, or the like does not diffuse sufficiently, and thus it is difficult for a crosslinking reaction to occur between the curable syrups, so that the cured product may not have uniform physical properties. Therefore, by having such a composition, the present invention can control the curing reaction rate of the curable composition according to the above production method to an appropriate level.

In the present invention, the curable composition may be a solventless composition. Here, the solventless composition is a composition substantially containing no solvent (aqueous solvent and organic solvent). Therefore, the content of aqueous and organic solvents in the curable composition may be 1 wt% or less, 0.5 wt% or less, 0.1 wt% or less, or may be substantially 0 wt%. That is, the curable composition of the present invention is implemented to have such a composition, so that it can implement physical properties equal to or better than those of a solvent type, while being solventless, and at the same time, can be suitable for an inert redox system.

In addition, the curable composition in the present invention may have a viscosity measured at a temperature of 25°C and a shear rate of 1 rpm in a range of 10,000 cps to 30,000 cps, 15,000 cps to 25,000 cps, 17,000 cps to 23,000 cps, or 18,000 cps to 22,000 cps. The viscosity can be measured at room temperature using spindle No. 63 in a Brookfield HB type viscometer.

The cured product according to the present application may have thermal conductance, and specifically, the cured product may have a thermal conductivity of 0.1 W/mK or more. It is not limited thereto, but as one example, the cured product may also have a thermal conductivity of about 50 W/mK or less, 45 W/mk or less, 40 W/mk or less, 35 W/mk or less, 30 W/mk or less, 25 W/mk. or less, 20 W/mK or less, 15 W/mK or less, about 10 W/mK or less, 9 W/mK or less, 8 W/mK or less, 7 W/mK or less, 6 W/mK or less, 5 W/mK or less, or 4 W/mK or less or so. The thermal conductivity of the cured product can be measured, for example, according to ASTM D5470 standard or ISO 22007-2 standard.

In one example, the cured product according to the present application can be used as a battery module case or a battery cell by exhibiting the above thermal conductivity, and can be effective in dissipating heat generated inside the battery module to the outside. The battery cell may be accommodated in the module case, one or more battery cells may be present in the module case, and a plurality of battery cells may be accommodated in the module case. The type of battery cell accommodated in the module case is not particularly limited, and all known various battery cells can be applied. In one example, the battery cell may be a pouch type.

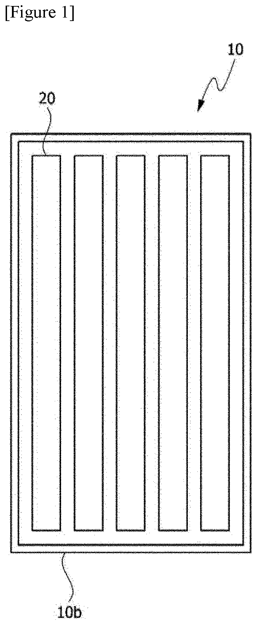

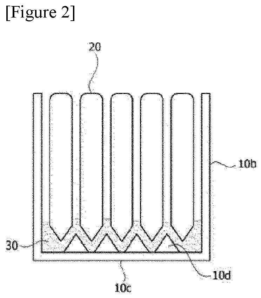

Figures 1 and 2 are schematic diagrams of a module case (10), in which battery cells (20) are accommodated, as observed from the top. The exemplary module case (10) may be in the form of a box including one lower plate (10a) and a plurality of side walls (10b), and may further include an upper plate (10c) sealing the internal space. The film (30) may be in the form of a relatively thin layer (see Figure 2), or may be in the form of filling the internal space of the case (10). In addition, as shown in Figure 2, in at least one surface inside the module case (10), for example, the surface (10a) in contact with the film (30), a guiding part (10d) capable of guiding the accommodated battery cell (20) may also be present.

In another specific example according to the present invention, the present invention may relate to a method for producing a cured product. The method for producing a cured product may comprise a step of contacting a layer of a curable composition comprising a curable syrup component, a filler component, and an initiator component with a layer of an initiator component of the above-described film including the layer of the initiator component on the surface.

The method of contacting the layer of the curable composition with the layer of the initiator component of the film including the layer of the initiator component on the surface is not significantly limited, but as one example, the curable composition may be directly applied on the film, or also be applied to any base material and then laminated. In addition, when the layer of the initiator component of the film including the layer of the initiator component on the surface is brought into contact with the layer of the curable composition, the layer of the initiator component of the film including the layer of the initiator component on the surface may also be brought into contact with one side or both sides of the layer of the curable composition.

For the respective constitutions, the contents as described above are applied in the same manner.

## Advantageous Effects

According to an example of the present invention, by using a one-component curing method rather than a two-component curing method in which a main agent and a curing agent are divided and mixed, and then applied, it is possible to provide a film having excellent storage properties and capable of curing even under room temperature and dark reaction conditions without separate UV or heat.

## Description of Drawings

Figures 1 and 2 are schematic diagrams of a module case, in which battery cells are accommodated, as observed from the top.

## Best Mode

Hereinafter, preferred experimental examples are presented to aid understanding of the present invention. However, the following experimental examples are only intended to aid understanding of the present invention, and the present invention is not limited by the following experimental examples.

## Preparation of radical polymer (P)

To a flask equipped with a mechanical stirrer, 2-ethylhexyl acrylate (2-EHA) and 2-hydroxyethyl acrylate (HEA) were added in a weight ratio of 60:40 (2-EHA: HEA). A solution, in which Irgacure 184 as a photoinitiator in an amount of 0.1 wt% or so relative to the total weight of the compounds added to the flask, and ethyl acetate (EAC) were diluted in a ratio of 1:1, was further added thereto, and then nitrogen gas was introduced thereto under a normal pressure condition, and the temperature was raised to about 60°C, and the mixture was irradiated with a metal halide lamp while stirring, and the nitrogen gas introduction and lamp irradiation were stopped as soon as the temperature reached 68°C, thereby obtaining a radical polymer (P) (solid content: about 12%).

At this time, the prepared radical polymer (P) had a viscosity of about 26,830 cps, as measured by Brookfield's DV-3 using spindle No. 63 at a temperature of 25°C and a torque of 31.6%, a weight average molecular weight (Mw) of about 2,192,000 g/mol, and a polydispersity index (PDI) of about 3.08 or so.

## Preparation Example 1: Preparation of curable composition

By using the above-prepared radical polymer (P), 2-hydroxyethyl acrylate (2-HEA), and glycidyl methacrylate (GMA) as a curable syrup, and a polyfunctional aliphatic urethane acrylate (SHIN-A T&C's SUO-1020) as a crosslinking agent (H), and using a phosphorus-based flame retardant (Chempia's FR-119L) as a flame retardant (N), a modified polyester dispersant (BYK's Disperbyk-111) as a dispersant (D), a filler component (F), methyl ethyl ketone peroxide (MEKP) as an oxidizing agent (O), and N,N-dimethyl p-toluidine (DMPT) as an organic compound (A), these materials were added to a paste mixer in a weight ratio of approximately 1.17:7.48:2.49:0.59:1.76:0.1:86.05:0.23:0.07 (P: 2-HEA: GMA: H: N: D: F: O: A) and sufficiently stirred to prepare a curable composition with a viscosity of about 200,000 cps as measured with Brookfield's DV-3 at room temperature of 25°C and a shear rate of 1 rpm.

As the filler composition (F), spherical alumina with an average particle diameter of about 70 $\mu$m (Bestrytech's

BAK-70, sphericity degree 0.95 or more), aluminum hydroxide with an average particle diameter of about 20 $\mu$m (Korea Alumina's DH-50P, sphericity degree 0.95 or more), and rectangular alumina with an average particle diameter of about 1.6 $\mu$m (Korea Alumina's KLS-51, sphericity degree less than 0.9) were mixed in a weight ratio of approximately 34.42:17.21:34.42, and used.

**Preparation Example 2: Preparation of curable composition**

By using the above-prepared radical polymer (P), 2-hydroxyethyl acrylate (2-HEA), and glycidyl methacrylate (GMA) as a curable syrup, and a polyfunctional aliphatic urethane acrylate (SHIN-A T&C's SUO-1020) as a crosslinking agent (H), and using a phosphorus-based flame retardant (Chempia's FR-119L) as a flame retardant (N), a modified polyester dispersant (BYK's Disperbyk-111) as a dispersant (D), a filler component (F), methyl ethyl ketone peroxide (MEKP) as an oxidizing agent (O), and N,N-dimethyl p-toluidine (DMPT) as an organic compound (A), these materials were added to a paste mixer in a weight ratio of approximately 0.5:3.7:1.2:0.48:1.71:0.1:92.05:0.2:0.06 (P: 2-HEA: GMA: H: N: D: F: O: A) and sufficiently stirred.

As the filler composition (F), spherical alumina with an average particle diameter of about 70 $\mu$m (Bestrytech's BAK-70, sphericity degree 0.95 or more), aluminum hydroxide with an average particle diameter of about 20 $\mu$m (Korea Alumina's DH-50P, sphericity degree 0.95 or more), and rectangular alumina with an average particle diameter of about 1.6 $\mu$m (Korea Alumina's KLS-51, sphericity degree less than 0.9) were mixed in a weight ratio of approximately 36.82:18.41:36.82, and used.

**Example 1**

A metal compound solution was prepared by diluting iron(III) actylacetonate as a metal compound (M) in toluene to 15 wt%.

Then, after the metal compound solution was each applied on an aluminum foil so that the weight ratio of the oxidizing agent, the organic compound, and the metal compound was approximately 0.23:0.07:0.32 (O: A: M) in the curable composition according to Preparation Example 1, it was dried at about 25°C for 5 minutes, and then dried on a hot plate at 100°C for 5 minutes to produce a film including an activation layer.

The above-prepared curable composition was applied to contact the metal compound of the activation layer to produce a cured product. At this time, the curable composition was applied to a thickness of 1T.

**Example 2**

A metal compound solution was prepared by diluting iron(III) acetylacetonate as a metal compound (M) in toluene to 15 wt%.

Then, after the metal compound solution was each applied on a PET film so that the weight ratio of the oxidizing agent, the organic compound, and the metal compound was approximately 0.23:0.07:0.32 (O: A: M) in the curable composition according to Preparation Example 1, it was dried at about 25°C for 5 minutes, and then dried on a hot plate at 100°C for 5 minutes to produce a film including an activation layer.

The above-prepared curable composition was applied to contact the metal compound of the activation layer to produce a cured product. At this time, the curable composition was applied to a thickness of 1T.

**Comparative Example 1**

A metal compound solution was prepared by diluting iron(III) actylacetonate as a metal compound (M) in toluene to 15 wt%.

Then, the metal compound solution was mixed with the above-prepared curable composition and sufficiently stirred so that the weight ratio of the oxidizing agent, the organic compound, and the metal compound was approximately 0.23:0.07:0.64 (O: A: M) in the curable composition according to Preparation Example 1.

The mixture was applied on an aluminum foil to a thickness of 2T, and a PET film was disposed on the top.

**Comparative Example 2**

The above-prepared curable composition was applied on an aluminum foil to a thickness of 1T in the same manner as in Example 1 without applying the metal compound solution.

**Comparative Example 3**

After the metal compound solution and the above-prepared curable composition were mixed together and applied on an aluminum foil to a thickness of about 1T without applying the metal compound solution on the aluminum foil so that the weight ratio of the oxidizing agent, the organic compound, and the metal compound was approximately 0.23:0.07:0.32 (O: A: M) in the curable composition according to Preparation Example 1, it was dried at about 25°C for 5 minutes, and then dried on a hot plate at 100°C for 5 minutes to produce a film including an activation layer.

**Comparative Example 4**

It was prepared in the same manner as in Example 1, except that the curable composition according to Preparation Example 2 was used.
In this case, the compatibility between the curable syrup and the filler component decreased, whereby a crumbling phenomenon without formulation occurred.

**Experimental Example 1: Hardness**

The PET film attached to each of the cured products produced through Examples and Comparative Examples was removed, and for the side where the PET film was removed from the cured product, it was measured using a durometer shore A hardness meter at a temperature of about 25°C. The hardness value represents the average value after 3-point measurement.

**Experimental Example 2: Total mass loss (TML)**

A total mass loss was evaluated in the following manner. A sample with a thickness of approximately 2T was manufactured by removing the PET film attached to each of the cured products produced through Examples and Comparative Examples and cutting it to fit an aluminum dish with a diameter of approximately 5 cm, and the weight (A, unit: g) of the sample was measured. Thereafter, immediately after the sample was left at 150°C for 45 minutes, the weight (B, unit: g) of the sample was measured, and TML was calculated according to the following general equation 2. In the following, C is the weight (unit: g) of aluminum attached to the cured product.

[General Equation 2]

$$\text{Total mass loss (TML, unit: \%)} = (A - B) / (A - C) \times 100$$

Table 1 below summarizes the results according to the above experimental examples.

[Table 1]

|  | Hardness (HS) | Total mass loss (%) |
|---|---|---|
| Example 1 | 93 | 0.98 |
| Example 2 | 92 | 1.02 |
| Comparative Example 1 | 91 | 1.11 |
| Comparative Example 2 | Uncured | 10.89 |
| Comparative Example 3 | 91 | 1.11 |

**Claims**

1. A film comprising a base material and an activation layer containing an initiator component on a surface of the base material, wherein

   when a layer of a curable composition comprising a curable syrup, a filler component, and an initiator component is brought into contact with the initiator component of the film, a curing reaction is performed, and
   the initiator component is an inert redox initiator system including an oxidizing agent and a reducing agent, where the reducing agent includes a metal compound, and the metal compound is included in an effective amount only in any one of the activation layer of the film and the layer of the curable composition.

2. The film according to claim 1, wherein
   the base material comprises a polymer, a plastic, a metal, a wood, a leather, or a concrete.

3. The film according to claim 1, wherein
   the curable composition comprises the filler component in an amount of at least 200 parts by weight based on 100 parts by weight of the curable syrup.

4. The film according to claim 1, wherein

   the filler component comprises at least two types of fillers having different average particle diameters from each other, and thea cured product satisfies the following general equation 1:

   [General Equation 1]

   $$5 \leq D_{50A}/D_{50C} \leq 100$$

   wherein, $D_{50A}$ is a maximum average particle diameter of the filler in the filler component, and $D_{50C}$ is a minimum average particle diameter of the filler in the filler component.

5. The film according to claim 1, wherein
   the filler component comprises three types of fillers having different average particle diameters.

6. The film according to claim 1, wherein
   the filler component comprises a first filler with an average particle diameter of more than 40 $\mu$m and 200 $\mu$m or less; a second filler with an average particle diameter of more than 5 $\mu$m and 40 $\mu$m or less; and a third filler with an average particle diameter in a range of 0.2 $\mu$m to 5 $\mu$m.

7. The film according to claim 1, wherein
   the filler component comprises fumed silica, clay, calcium carbonate ($CaCO_3$), aluminum oxide ($Al_2O_3$), aluminum nitride (AlN), boron nitride (BN), silicon nitride ($Si_3N_4$), silicon carbide (SiC), beryllium oxide (BeO), zinc oxide (ZnO), aluminum hydroxide ($Al(OH)_3$), boehmite, magnesium oxide (MgO), magnesium hydroxide ($Mg(OH)_2$), or a carbon filler.

8. The film according to claim 1, wherein
   the curable composition comprises the reducing agent in a range of 0.05 to 6 parts by weight based on 100 parts by weight of the curable syrup.

9. The film according to claim 1, wherein
   the metal compound is a salt or chelate containing a metal ion, or a hydrate thereof, and the metal ion is selected from cobalt, iron, vanadium, copper, manganese, nickel, titanium, aluminum, tin, chromium, zinc, zirconium, indium, manganese, or a mixture thereof.

10. The film according to claim 1, wherein
    the reducing agent further comprises at least one organic compound from the group consisting of amines, pyridines, aldehyde amine condensation compounds, thioureas, and their derivatives.

11. The film according to claim 10, wherein
    the organic compound is included in a range of 5 to 50 parts by weight based on100 parts by weight of the metal compound.

12. The film according to claim 1, wherein
    the oxidizing agent comprises a peroxide, a peroxy ester, a diacyl peroxide, or a persulfate.

13. The film according to claim 1, wherein

the oxidizing agent is included in a range of 30 to 100 parts by weight based on 100 parts by weight of the reducing agent.

14. The film according to claim 1, wherein
the curable composition comprises the curable syrup in an amount of 6 to 20 wt%.

15. The film according to claim 1, wherein
the curable syrup comprises an alkyl (meth)acrylate unit, a polar functional group-containing monomer unit, and a crosslinking agent.

16. The film according to claim 15, wherein
the polar functional group comprises a hydroxy group, an epoxy group, an isocyanate group, a glycidyl group, an alkenyloxycarbonyl group, a (meth)acryloyl group, or an alkenyloxyalkyl group.

17. The film according to claim 15, wherein
the curable syrup comprises the alkyl (meth)acrylate unit in an amount of 1 to 12 wt%.

18. The film according to claim 15, wherein
the curable syrup comprises the polar functional group-containing monomer unit in an amount of 500 parts by weight or more relative to 100 parts by weight of the alkyl (meth)acrylate unit.

19. The film according to claim 15, wherein
the curable syrup comprises, as the polar functional group-containing monomer unit, a hydroxy group-containing monomer unit and an epoxy group-containing monomer unit.

20. The film according to 15, wherein
the crosslinking agent comprises a polyfunctional acrylate compound, a polyfunctional isocyanate compound, or a urethane acrylate compound.

21. The film according to claim 1, wherein
the curable composition is solventless.

22. The film according to claim 1, wherein
the curable composition has a viscosity in a range of 10,000 cps to 25,000 cps as measured at a temperature of 25°C and a shear rate of 1 rpm.

23. A method for producing a cured productcomprising a step of contacting a layer of a curable composition, which comprises a curable syrup component, a filler component, and an initiator component, with the layer of the initiator component of the film according to claim 1.

24. The method for producing a cured product according to claim 23, comprising
a step of contacting the layer of the initiator component of the film including the layer of the initiator component on the surface with both sides of the layer of the curable composition.

25. The method for producing a cured product according to claim 23, wherein
the curing reaction proceeds at room temperature through the contact step.

26. The method for producing a cured product according to claim 25, wherein
the curing reaction is performed by a redox polymerization reaction of the initiator component of the curable composition and the initiator component present in the activation layer of the film.

[Figure 1]

[Figure 2]

# EP 4 524 170 A1

## INTERNATIONAL SEARCH REPORT

| | International application No. |
|---|---|
| | **PCT/KR2023/008384** |

### A. CLASSIFICATION OF SUBJECT MATTER

**C08F 220/18**(2006.01)i; **C08F 4/40**(2006.01)i; **C08F 2/38**(2006.01)i; **C08F 2/44**(2006.01)i; **C08K 5/29**(2006.01)i; **H01M 50/121**(2021.01)i; **C08J 5/18**(2006.01)i

According to International Patent Classification (IPC) or to both national classification and IPC

### B. FIELDS SEARCHED

Minimum documentation searched (classification system followed by classification symbols)

C08F 220/18(2006.01); C08F 2/38(2006.01); C08F 2/44(2006.01); C08F 220/28(2006.01); C08F 265/06(2006.01); C08K 3/10(2006.01); C09J 133/00(2006.01); C09J 201/00(2006.01); C09J 4/02(2006.01); C09J 7/50(2018.01); C09J 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경화물(cured product), 필름(film), 개시제(initiator), 필러(filler), 산화제(oxidizer), 환원제(reductant), 레독스(redox)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0118140 A (3M INNOVATIVE PROPERTIES COMPANY) 14 October 2020 (2020-10-14)<br>See claims 1, 4, 12 and 19 and paragraphs [0001]-[0045] and [0402]-[0422]. | 1-26 |
| A | KR 10-2022-0030103 A (LG ENERGY SOLUTION, LTD.) 10 March 2022 (2022-03-10)<br>See claims 1-15, paragraphs [0018], [0041]-[0092] and [0113]-[0224] and figure 1. | 1-26 |
| A | KR 10-2022-0043855 A (LG CHEM, LTD.) 05 April 2022 (2022-04-05)<br>See claims 1-27. | 1-26 |
| A | JP 2018-188602 A (CEMEDINE CO., LTD.) 29 November 2018 (2018-11-29)<br>See claims 1-7. | 1-26 |
| A | JP 2018-177957 A (DAINIPPON PRINTING CO., LTD.) 15 November 2018 (2018-11-15)<br>See claims 1-43. | 1-26 |

☐ Further documents are listed in the continuation of Box C.　　☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 September 2023** | **25 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/008384**

| Patent document cited in search report | | | Publication date (day/month/year) | Patent family member(s) | | | Publication date (day/month/year) |
|---|---|---|---|---|---|---|---|
| KR | 10-2020-0118140 | A | 14 October 2020 | CN | 111699229 | A | 22 September 2020 |
| | | | | CN | 111699229 | B | 28 February 2023 |
| | | | | CN | 111699230 | A | 22 September 2020 |
| | | | | CN | 111699230 | B | 16 August 2022 |
| | | | | CN | 111699231 | A | 22 September 2020 |
| | | | | CN | 111699231 | B | 28 July 2023 |
| | | | | EP | 3749725 | A1 | 16 December 2020 |
| | | | | EP | 3749726 | A1 | 16 December 2020 |
| | | | | EP | 3749727 | A1 | 16 December 2020 |
| | | | | KR | 10-2020-0118141 | A | 14 October 2020 |
| | | | | US | 2020-362204 | A1 | 19 November 2020 |
| | | | | US | 2021-102095 | A1 | 08 April 2021 |
| | | | | US | 2021-102097 | A1 | 08 April 2021 |
| | | | | WO | 2019-157262 | A1 | 15 August 2019 |
| | | | | WO | 2019-157264 | A1 | 15 August 2019 |
| | | | | WO | 2019-157265 | A1 | 15 August 2019 |
| KR | 10-2022-0030103 | A | 10 March 2022 | None | | | |
| KR | 10-2022-0043855 | A | 05 April 2022 | WO | 2022-071667 | A1 | 07 April 2022 |
| JP | 2018-188602 | A | 29 November 2018 | None | | | |
| JP | 2018-177957 | A | 15 November 2018 | JP | 7077529 | B2 | 31 May 2022 |

Form PCT/ISA/210 (patent family annex) (July 2022)